# EUROPEAN PATENT APPLICATION

(11) **EP 4 811 566 A1**
(43) Date of publication of application: **23.09.2026**
(21) Application number: 24902431.6
(22) Date of filing: 05.11.2024
(51) Int. Cl.: H01S 3/067, H01S 3/00, H01S 3/094, H01S 3/10

(54) **LASER DEVICE, AND RELATED DEVICE AND METHOD**

(30) Priority: 12.12.2023 CN 202311709242
(71) Applicant: Huawei Technologies Co., Ltd., Shenzhen, Guangdong 518129 (CN)
(72) Inventor: CUI, Yifan, Shenzhen, Guangdong 518129 (CN); CHEN, Hao, Shenzhen, Guangdong 518129 (CN); LI, Shujie, Shenzhen, Guangdong 518129 (CN); CAO, Shiyi, Shenzhen, Guangdong 518129 (CN)
(74) Representative: Gill Jennings & Every LLP
(86) International application number: PCT/CN2024/129889
(87) International publication number: WO 2025/124007

(57) **Abstract**

Embodiments of this application disclose a laser, and a related device and method. The laser includes a laser generation module, a first coupler, and a reflective space structure formed by at least one reflective element. A plurality of channels of laser light generated by the laser generation module form an optical pulse through interference in the first coupler, and the optical pulse is split into two branches: a first optical pulse propagating toward the reflective element and a second optical pulse that is output. The first optical pulse is reflected back to the laser generation module by the reflective element. By controlling movement of the reflective element, an optical path length of an optical pulse propagating in free space can be changed, so that a repetition frequency of the optical pulse generated by the laser generation module can be adjusted. It should be understood that, controlling movement of the reflective element can adjust an optical path length of an optical pulse in a round trip in free space, which is equivalent to changing the optical path length of the optical pulse in free space by multiple times, to help adjust the repetition frequency of the optical pulse in a larger range. For example, wide-range frequency tuning exceeding 2 MHz can be implemented.

## Description

This application claims priority to Chinese Patent Application No. 202311709242.3, filed with the China National Intellectual Property Administration on December 12, 2023 and entitled "LASER, AND RELATED DEVICE AND METHOD", which is incorporated herein by reference in its entirety.

### TECHNICAL FIELD

This application relates to the field of lasers, and in particular, to a laser, and a related device and method.

### BACKGROUND

Femtosecond laser light is laser light with a time-domain pulse width on the order of femtoseconds. The femtosecond laser light is not monochromatic light, but is formed by a spectrum of light having wavelengths continuously varying around a center wavelength. By utilizing spatial coherence of continuous-wavelength light within this range, significant temporal compression can be achieved, thereby realizing pulse output on the order of femtoseconds. A laser with short pulses on the order of femtoseconds is typically implemented by using a mode-locking technique.

A mode-locked fiber laser can output a periodic train of femtosecond pulses, with a pulse interval being a time period required for light to make one round trip in a resonant cavity of the laser. Therefore, a period of the femtosecond laser pulse train is proportional to a cavity length of a laser resonant cavity. In a frequency domain, an output of a mode-locked laser is a series of equally-spaced comb-like teeth, and therefore, the output is also referred to as an optical frequency comb. The spacing between two comb lines is a repetition frequency of the laser. In other words, a repetition frequency of the femtosecond laser pulse train is a reciprocal of the period. Therefore, to obtain a femtosecond laser pulse train with a locked repetition frequency, feedback control needs to be performed on the cavity length of the laser resonant cavity. However, on the basis of implementing repetition frequency locking, the conventional technology does not provide a solution capable of dynamically adjusting the repetition frequency over a large range and with high precision.

### SUMMARY

Embodiments of this application provide a laser, and a related device and method, to help adjust a repetition frequency of an optical pulse in a larger range, and improve precision of adjusting the repetition frequency.

According to a first aspect, an embodiment of this application provides a laser. The laser includes: a laser emitting apparatus and a control apparatus, where the laser emitting apparatus includes a laser generation module, a first coupler, and a first reflective element. The laser generation module is configured to generate first laser light and second laser light. The first coupler is configured to cause interference between the first laser light and the second laser light to obtain an optical pulse, where the optical pulse includes a first optical pulse propagating toward the first reflective element and a second optical pulse that is output. The first reflective element is configured to reflect the first optical pulse back to the laser generation module. The control apparatus is configured to control movement of the first reflective element to adjust an optical path length of the first optical pulse, thereby adjusting a repetition frequency of the optical pulse.

In this implementation, by controlling movement of the reflective element, an optical path length of an optical pulse propagating in free space can be changed, so that a repetition frequency of the optical pulse generated by the laser generation module can be adjusted. By controlling movement of the reflective element, an optical path length of an optical pulse in a round trip in free space can be adjusted, which is equivalent to changing the optical path length of the optical pulse in free space by multiple times, to help adjust the repetition frequency of the optical pulse in a larger range. For example, a wide-range optical path length change exceeding 60 mm can be implemented, and wide-range frequency tuning exceeding 2 MHz can be implemented.

In some possible implementations, the laser generation module includes a nonlinear amplifying loop mirror (nonlinear amplifying loop mirror, NALM) and a pump source, and the NALM is connected to the first coupler. The pump source is configured to output pump light to the NALM, and the NALM generates the first laser light and the second laser light based on the pump light. For example, the first laser light generated by the NALM propagates clockwise in the NALM, and the second laser light generated by the NALM propagates clockwise in the NALM. The first coupler causes nonlinear interference between the first laser light and the second laser light to obtain an optical pulse, and the optical pulse passing through the first coupler is split into two branches: a first optical pulse propagating toward the first reflective element and a second optical pulse that is output. It should be understood that, the use of the NALM reduces a mode locking threshold, and improves a mode-locked space length change resistance capability. Even if an optical path length of an optical pulse is adjusted in a large range, continuous generation of optical pulses can still be maintained.

In some possible implementations, the NALM includes a wavelength division multiplexer WDM and a gain fiber. The WDM is configured to couple the pump light output by the pump source to the gain fiber. The gain fiber has a function of amplifying light, to help generate a stable optical pulse.

In some possible implementations, the NALM further includes a saturable absorber, thereby enhancing scalability of this solution.

In some possible implementations, the laser emitting apparatus further includes a second reflective element. The first reflective element is configured to reflect the first optical pulse to the second reflective element, and then reflect, back to the laser generation module, the first optical pulse reflected from the second reflective element. The control apparatus is further configured to control movement of the second reflective element to adjust the optical path length of the first optical pulse. In this implementation, a plurality of reflective elements are disposed in free space, so that an optical path length of an optical pulse in free space can be adjusted in a larger range, which is more conducive to increasing an adjustment range of a repetition frequency of the optical pulse.

In some possible implementations, the laser emitting apparatus further includes a fiber collimator. The fiber collimator is configured to collimate the first optical pulse from the first coupler, where the collimated first optical pulse propagates in free space toward the first reflective element. It should be understood that, for collimated spatial light obtained by using the fiber collimator, light spot diffusion is relatively small, and a reflected optical pulse is more conducive to coupling to an optical fiber, to help improve a mode locking effect of the laser.

In some possible implementations, a beam output by the fiber collimator converges first and then diverges. A collimation distance of the fiber collimator is a distance between a spatial position and the fiber collimator when a light spot size on the spatial position is the same as an initial light spot size. The distance may also be referred to as a working distance of the fiber collimator. The collimation distance of the fiber collimator is greater than a one-way propagation distance of the first optical pulse in free space. In this way, a light spot size of the first optical pulse reflected back to the fiber collimator changes slightly and spreads slightly relative to the initial light spot size, which is more conducive to coupling to the optical fiber, to help improve the mode locking effect of the laser.

In some possible implementations, the laser emitting apparatus further includes a lens or a diffractive optical element (diffractive optical elements, DOE). The lens or the DOE is located between the fiber collimator and the first reflective element. The lens or the DOE is configured to perform beam shaping on the first optical pulse from the fiber collimator, and propagate the first optical pulse undergoing the beam shaping to the first reflective element. The lens and the DOE are configured to perform beam shaping on the first optical pulse collimated by the fiber collimator, to achieve an effect of assisting collimation. A light spot size of the first optical pulse propagated to a position of the first reflective element through the lens or the DOE is the same as or close to an initial light spot size output by the fiber collimator. In this way, the light spot size of the first optical pulse reflected back to the fiber collimator changes slightly and spreads slightly relative to the initial light spot size, which is more conducive to coupling to the optical fiber, to help improve the mode locking effect of the laser.

In some possible implementations, the second optical pulse propagates toward the control apparatus, and the laser emitting apparatus further includes a piezoelectric ceramic transducer (piezoelectric ceramic transducer, PZT). The PZT is connected to the fiber collimator, and the control apparatus is further configured to adjust, based on the second optical pulse, a voltage applied to the PZT to control movement of the fiber collimator to adjust the optical path length of the first optical pulse, thereby quickly implementing locking of the repetition frequency of the optical pulse.

In some possible implementations, the second optical pulse propagates toward the control apparatus, the laser emitting apparatus further includes a PZT that is connected to an optical fiber in the laser generation module or an optical fiber configured to propagate the first optical pulse, and the control apparatus is further configured to adjust, based on the second optical pulse, a voltage applied to the PZT to control stretching of the optical fiber to adjust the optical path length of the optical pulse, thereby quickly implementing locking of the repetition frequency of the optical pulse.

In some possible implementations, the control apparatus is specifically configured to control movement of the first reflective element based on the voltage applied to the PZT to adjust the optical path length of the first optical pulse, thereby adjusting the repetition frequency of the optical pulse. In other words, the control apparatus uses a serial control manner for the PZT and the first reflective element. That is, the optical path length of the optical pulse is adjusted first by controlling the PZT, to implement frequency locking. If a risk of frequency unlocking is found based on an adjustment state of the PZT, the optical path length of the optical pulse may be further compensated by controlling movement of the first reflective element, to avoid frequency unlocking in a frequency tuning process.

In some possible implementations, the control apparatus includes: a reference signal source, a photodetector, a frequency mixer, a first control module, and a second control module. The reference signal source is configured to output a target reference signal. The photodetector is configured to convert the second optical pulse into an electrical signal. The frequency mixer is configured to mix the target reference signal with the electrical signal to obtain a mixed signal. The first control module is configured to adjust, based on the mixed signal, the voltage applied to the PZT to control movement of the fiber collimator to adjust the optical path length of the first optical pulse, thereby locking the repetition frequency of the optical pulse generated by the laser generation module to a frequency of the target reference signal. If the voltage applied to the PZT is outside a preset voltage range, the second control module is configured to control movement of the first reflective element based on the voltage applied to the PZT and the preset voltage range to adjust the optical path length of the first optical pulse, thereby adjusting the repetition frequency of the optical pulse generated by the laser generation module. This implementation provides a specific manner of implementing adjustment of the repetition frequency of the optical pulse through the control apparatus. In this way, the repetition frequency of the optical pulse can be adjusted more precisely while frequency locking is implemented, thereby improving the accuracy of adjusting the repetition frequency and reducing the risk of frequency unlocking. It should be understood that, in some possible scenarios, the first control module and the second control module may be two independent circuit boards, respectively, or in some other possible scenarios, the first control module and the second control module may be integrated together through a controller.

In some possible implementations, the control apparatus further includes a filter. The filter is configured to filter the electrical signal. The frequency mixer is configured to mix the target reference signal with the filtered electrical signal to obtain a mixed signal. A frequency error obtained after mixing can be more accurate through filtering.

In some possible implementations, a frequency tuning step of the reference signal source from outputting an initial reference signal to outputting the target reference signal is less than a first preset value. The first preset value is a frequency adjustment amount of the repetition frequency of the optical pulse corresponding to a maximum adjustment amount of the voltage applied to the PZT. In other words, the frequency tuning step of the reference signal source cannot be too large, which can effectively avoid frequency unlocking.

In some possible implementations, the frequency tuning step of the reference signal source from outputting the initial reference signal to outputting the target reference signal is greater than or equal to a second preset value. The second preset value is a frequency adjustment amount of the repetition frequency of the optical pulse corresponding to a minimum displacement distance of the first reflective element. In other words, the frequency tuning step of the reference signal source cannot be too small, which helps ensure a speed of a frequency tuning process.

In some possible implementations, the frequency adjustment amount of the repetition frequency of the optical pulse corresponding to the minimum displacement distance of the first reflective element is less than the frequency adjustment amount of the repetition frequency of the optical pulse corresponding to the maximum adjustment amount of the voltage applied to the PZT. In other words, an adjustment amplitude of controlling movement of the first reflective element cannot be excessively large, and needs to ensure that frequency unlocking does not occur in the frequency tuning process.

In some possible implementations, the laser emitting apparatus further includes a second coupler. The second coupler is configured to split the second optical pulse, where one branch of the split second optical pulse propagates toward the control apparatus, and another branch of the split second optical pulse is output externally.

According to a second aspect, an embodiment of this application provides an electrical signal phase detection device. The electrical signal phase detection device includes: a phase detector, a photodetector, and the laser described in any implementation of the first aspect. The photodetector is configured to convert light output by the laser into a first electrical signal, and transmit the first electrical signal to the phase detector. The phase detector is configured to determine a phase difference between the first electrical signal and a second electrical signal that is input.

According to a third aspect, an embodiment of this application provides an optical frequency comb device. The optical frequency comb device includes: a laser beat note module, an initial frequency locking module, and the laser described in any implementation of the first aspect. The laser beat note module is configured to perform spectral broadening, frequency multiplication, and beat note detection based on the optical pulse emitted by the laser to obtain an initial frequency signal. The initial frequency locking module is configured to output a control signal to the laser based on the initial frequency signal. The laser is configured to lock an initial frequency based on the control signal, and output an optical frequency comb signal.

According to a fourth aspect, an embodiment of this application provides an optical module. The optical module includes the laser described in any implementation of the first aspect, an electronic chip, and a modulator. The electronic chip is configured to drive the modulator to modulate light emitted by the laser, to obtain an optical signal.

According to a fifth aspect, an embodiment of this application provides an optical transmission device. The optical transmission device includes a wavelength division multiplexer and a plurality of optical modules as described in the fourth aspect. The wavelength division multiplexer is configured to multiplex optical signals output by the plurality of optical modules, and output a multiplexed optical signal.

According to a sixth aspect, an embodiment of this application provides an optical pulse frequency tuning method, applicable to a laser. The laser includes: a laser emitting apparatus and a control apparatus. The laser emitting apparatus includes a laser generation module, a first coupler, and a first reflective element. The optical pulse frequency tuning method includes: A laser generation module generates first laser light and second laser light. The first coupler causes interference between the first laser light and the second laser light to obtain an optical pulse, where the optical pulse includes a first optical pulse propagating toward the first reflective element and a second optical pulse that is output. The first reflective element reflects the first optical pulse back to the laser generation module. The control apparatus controls movement of the first reflective element to adjust an optical path length of the first optical pulse.

In some possible implementations, the laser generation module includes an NALM and a pump source. The NALM is connected to the first coupler. The method further includes: The pump source outputs pump light to the NALM, and the NALM generates, based on the pump light, the first laser light and the second laser light.

In some possible implementations, the NALM includes a wavelength division multiplexer WDM and a gain fiber. The method further includes: The WDM couples the pump light output by the pump source to the gain fiber.

In some possible implementations, the NALM further includes a saturable absorber.

In some possible implementations, the laser emitting apparatus further includes a second reflective element. The method further includes: The first reflective element reflects the first optical pulse to the second reflective element, and then reflects, back to the laser generation module, the first optical pulse reflected from the second reflective element. The control apparatus also controls movement of the second reflective element to adjust the optical path length of the first optical pulse.

In some possible implementations, the laser emitting apparatus further includes a fiber collimator. The method further includes: The fiber collimator collimates the optical pulse from the first coupler, where the collimated first optical pulse propagates in free space toward the first reflective element.

In some possible implementations, a beam output by the fiber collimator converges first and then diverges. A collimation distance of the fiber collimator is a distance between a spatial position and the fiber collimator when a light spot size on the spatial position is the same as an initial light spot size. The distance may also be referred to as a working distance of the fiber collimator. The collimation distance of the fiber collimator is greater than a one-way propagation distance of the first optical pulse in free space. In this way, a light spot size of the first optical pulse reflected back to the fiber collimator changes slightly and spreads slightly relative to the initial light spot size, which is more conducive to coupling to the optical fiber, to help improve the mode locking effect of the laser.

In some possible implementations, the laser emitting apparatus further includes a lens or a DOE. The lens or the DOE is located between the fiber collimator and the first reflective element. The method further includes: The lens or the DOE performs beam shaping on the first optical pulse from the fiber collimator, and propagates the first optical pulse undergoing the beam shaping to the first reflective element. The lens and the DOE are configured to perform beam shaping on the first optical pulse collimated by the fiber collimator, to achieve an effect of assisting collimation. A light spot size of the first optical pulse propagating to a position of the first reflective element through the lens or the DOE is the same as or close to an initial light spot size output by the fiber collimator. In this way, the light spot size of the first optical pulse reflected back to the fiber collimator changes slightly and spreads slightly relative to the initial light spot size, which is more conducive to coupling to the optical fiber, to help improve the mode locking effect of the laser.

In some possible implementations, the second optical pulse propagates toward the control apparatus, and the laser emitting apparatus further includes a PZT that is connected to the fiber collimator. The method further includes: The control apparatus adjusts, based on the second optical pulse, the voltage applied to the PZT to control movement of the fiber collimator to adjust the optical path length of the first optical pulse.

In some possible implementations, the second optical pulse propagates toward the control apparatus, and the laser emitting apparatus further includes a PZT that is connected to an optical fiber in the laser generation module or an optical fiber configured to propagate the first optical pulse. The method further includes: The control apparatus adjusts, based on the second optical pulse, the voltage applied to the PZT to control stretching of the optical fiber to adjust the optical path length of the optical pulse.

In some possible implementations, that the control apparatus controls movement of the first reflective element includes: The control apparatus controls movement of the first reflective element based on the voltage applied to the PZT.

In some possible implementations, the control apparatus includes: a reference signal source, a photodetector, a frequency mixer, a first control module, and a second control module. The method further includes: The reference signal source outputs a target reference signal; the optoelectronic detector converts the second optical pulse into an electrical signal; the frequency mixer mixes the target reference signal with the electrical signal to obtain a mixed signal; the first control module adjusts, based on the mixed signal, the voltage applied to the PZT to control movement of the fiber collimator to adjust the optical path length of the first optical pulse, thereby locking the repetition frequency of the optical pulse generated by the laser generation module to a frequency of the target reference signal; and if the voltage applied to the PZT is outside a preset voltage range, the second control module controls movement of the first reflective element based on the voltage applied to the PZT and the preset voltage range to adjust the optical path length of the first optical pulse, thereby adjusting the repetition frequency of the optical pulse generated by the laser generation module.

In some possible implementations, the control apparatus further includes a filter. The method further includes: The filter filters the electrical signal, and the frequency mixer mixes the target reference signal with the filtered electrical signal to obtain a mixed signal.

In some possible implementations, a frequency tuning step of the reference signal source from outputting an initial reference signal to outputting the target reference signal is less than a first preset value. The first preset value is a frequency adjustment amount of the repetition frequency of the optical pulse corresponding to a maximum adjustment amount of the voltage applied to the PZT.

In some possible implementations, the frequency tuning step of the reference signal source from outputting the initial reference signal to outputting the target reference signal is greater than or equal to a second preset value. The second preset value is a frequency adjustment amount of the repetition frequency of the optical pulse corresponding to a minimum displacement distance of the first reflective element.

In some possible implementations, the frequency adjustment amount of the repetition frequency of the optical pulse corresponding to the minimum displacement distance of the first reflective element is less than the frequency adjustment amount of the repetition frequency of the optical pulse corresponding to the maximum adjustment amount of the voltage applied to the PZT.

In some possible implementations, the laser emitting apparatus further includes a second coupler. The method further includes: the second coupler splits the second optical pulse, where one branch of the split second optical pulse propagates toward the control apparatus, and another branch of the split second optical pulse is output externally.

In embodiments of this application, the laser includes a laser generation module, a first coupler, and a reflective space structure formed by at least one reflective element. A plurality of channels of laser light generated by the laser generation module form an optical pulse through interference in the first coupler, and the optical pulse is split into two branches: a first optical pulse propagating toward the reflective element and a second optical pulse that is output. The first optical pulse is reflected back to the laser generation module by the reflective element. By controlling movement of the reflective element, an optical path length of an optical pulse propagating in free space can be changed, so that a repetition frequency of the optical pulse generated by the laser generation module can be adjusted. It should be understood that, controlling movement of the reflective element can adjust an optical path length of an optical pulse in a round trip in free space, which is equivalent to changing the optical path length of the optical pulse in free space by multiple times, to help adjust the repetition frequency of the optical pulse in a larger range. For example, wide-range frequency tuning exceeding 2 MHz can be implemented. In addition, the repetition frequency of the optical pulse generated by the laser generation module is locked by adjusting the voltage applied to the PZT, and a displacement direction and a displacement distance of the reflective element can be further adjusted based on the voltage applied to the PZT. In this way, the repetition frequency of the optical pulse can be adjusted more precisely while frequency locking is implemented, thereby improving the accuracy of adjusting the repetition frequency and reducing the risk of frequency unlocking.

### BRIEF DESCRIPTION OF DRAWINGS

FIG. 1 is a diagram of a first structure of a laser according to an embodiment of this application;
FIG. 2 is a diagram of a second structure of a laser according to an embodiment of this application;
FIG. 3 is a diagram of a third structure of a laser according to an embodiment of this application;
FIG. 4 is a diagram of a fourth structure of a laser according to an embodiment of this application;
FIG. 5 is a diagram of a fifth structure of a laser according to an embodiment of this application;
FIG. 6 is a first diagram of an optical pulse, that is output by a fiber collimator, propagating in free space according to an embodiment of this application;
FIG. 7 is a second diagram of an optical pulse, that is output by a fiber collimator, propagating in free space according to an embodiment of this application;
FIG. 8 is a third diagram of an optical pulse, that is output by a fiber collimator, propagating in free space according to an embodiment of this application;
FIG. 9 is a diagram of a sixth structure of a laser according to an embodiment of this application;
FIG. 10 is a schematic flowchart of adjusting a repetition frequency of an optical pulse according to an embodiment of this application;
FIG. 11 is a diagram of a seventh structure of a laser according to an embodiment of this application;
FIG. 12 is a diagram of a drift measurement result of a repetition frequency of an optical pulse according to an embodiment of this application;
FIG. 13 is a diagram of a comparison between a locked repetition frequency and an unlocked repetition frequency of an optical pulse according to an embodiment of this application;
FIG. 14 is a diagram of an electrical signal phase detection device according to an embodiment of this application;
FIG. 15 shows an optical frequency comb device according to an embodiment of this application; and
FIG. 16 is a diagram of an embodiment of an optical pulse frequency tuning method according to an embodiment of this application.

### DESCRIPTION OF EMBODIMENTS

Embodiments of this application provide a laser, and a related device and method. The laser includes a laser generation module, a first coupler, and a reflective space structure formed by at least one reflective element. A plurality of channels of laser light generated by the laser generation module form an optical pulse through interference in the first coupler, and the optical pulse is split into two branches: a first optical pulse propagating toward the reflective element and a second optical pulse that is output. The first optical pulse is reflected back to the laser generation module by the reflective element, and controlling movement of the reflective element can adjust an optical path length of the first optical pulse in a round trip in free space, which is equivalent to changing the optical path length of the first optical pulse in free space by multiple times, to help adjust a repetition frequency of the optical pulse in a larger range. It should be understood that, the laser provided in embodiments of this application may also be referred to as a mode-locked laser or a mode-locked fiber laser, which can generate highly stable femtosecond laser light, has a large-range repetition frequency adjustment capability, and can be applied to fields such as optical frequency comb fabrication, high-precision laser ranging, precision microprocessing, fiber time-frequency transfer, and high-precision meter fabrication and calibration.

It should be noted that in the specification, claims, and the foregoing accompanying drawings of this application, the terms "first", "second", and the like are intended to distinguish between similar objects but do not limit a specific order or sequence. It should be understood that, the foregoing terms are interchangeable in proper cases, so that embodiments described in this application can be implemented in a sequence other than the content described in this application. In addition, the terms "include", "have", and any other variant thereof are intended to cover a non-exclusive inclusion. For example, a process, a method, a system, a product, or a device that includes a series of steps or units is not necessarily limited to those expressly enumerated steps or units, but may include other steps or units not expressly enumerated or inherent to such a process, method, product, or device.

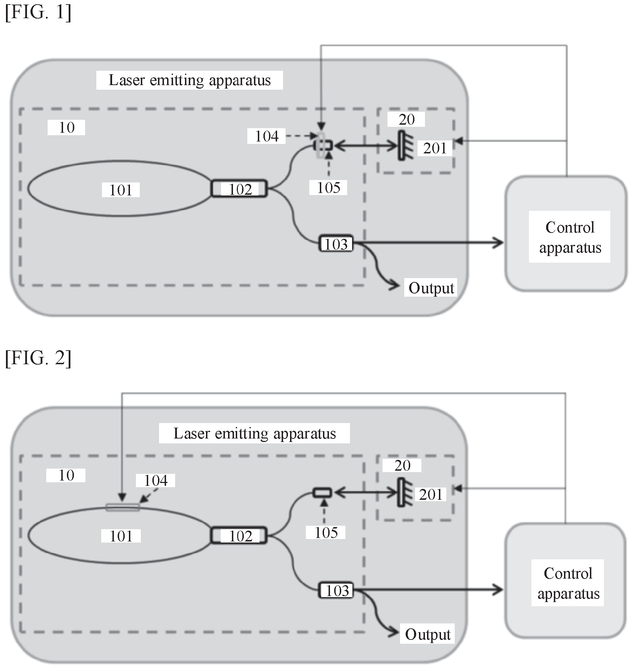

FIG. 1 is a diagram of a first structure of a laser according to an embodiment of this application. As shown in FIG. 1, the laser includes a laser emitting apparatus and a control apparatus. The control apparatus is configured to adjust the laser emitting apparatus based on an optical pulse emitted by the laser emitting apparatus, to adjust a repetition frequency of the optical pulse and lock the repetition frequency of the optical pulse. For ease of description, the laser emitting apparatus is divided into two parts: a laser body 10 and a space reflection module 20. Such division may not exist in actual product implementation. It should be understood that, the laser emitting apparatus needs to be packaged as a whole with sealing and vibration isolation, and active temperature control needs to be performed. This series of steps can reduce a parameter, that is, drift of the repetition frequency, to the order of 10 Hz or less.

Specifically, the laser body 10 includes a laser generation module 101, a first coupler 102, a second coupler 103, a piezoelectric ceramic transducer (piezoelectric ceramic transducer, PZT) 104, and a fiber collimator 105, and the space reflection module 20 includes a first reflective element 201. The laser generation module 101 is configured to generate laser light. For example, the generated laser light includes first laser light and second laser light. The first coupler 102 causes nonlinear interference between the first laser light and the second laser light to obtain an optical pulse, and the optical pulse passing through the first coupler 102 is split into two branches: a first optical pulse propagating toward the fiber collimator 105 and a second optical pulse that is output. The second optical pulse passes through the second coupler 103 and is split into two branches. One branch of the split second optical pulse propagates toward the control apparatus, and another branch of the split second optical pulse is output externally. It should be understood that, the first coupler 102 is separately connected to the second coupler 103 and the fiber collimator 105 through an optical fiber. The fiber collimator 105 collimates the input first optical pulse, and the collimated first optical pulse propagates in free space toward the first reflective element 201, then is reflected back to the fiber collimator 105 by the first reflective element 201, and propagates back to the laser generation module 101 along an original path.

Based on the foregoing description, this process of propagation from the laser generation module 101 to the first reflective element 201 and returning along the original path may be understood as that the optical pulse propagates in a resonant cavity of the laser. A pulse interval is a time period for the optical pulse to complete one cycle in the resonant cavity, and a repetition frequency of the optical pulse is a reciprocal of the period. Therefore, the repetition frequency of the optical pulse can be adjusted by adjusting an optical path length of the optical pulse propagating in the resonant cavity. Specifically, the control apparatus may adjust, based on a current repetition frequency of the second optical pulse and a target frequency expected to be reached, a voltage applied to the PZT 104 and control movement of the first reflective element 201 based on the voltage applied to the PZT. The following describes in detail a specific manner of cooperative adjustment of the PZT 104 and the first reflective element 201. In an example, as shown in FIG. 1, the PZT 104 is connected to the fiber collimator 105, and adjusting the voltage applied to the PZT 104 may enable the PZT to drive, through stretching, the fiber collimator 105 to move, so that an optical path length of the first optical pulse propagating in free space may be changed, thereby adjusting the repetition frequency of the optical pulse. Controlling movement of the first reflective element 201 may also change the optical path length of the first optical pulse propagating in free space, and can also adjust the repetition frequency of the optical pulse. It should be understood that, a specific manner of controlling movement of the first reflective element 201 is not limited in this application. For example, the first reflective element 201 is placed on a displacement stage, and movement of the displacement stage is controlled to drive the first reflective element 201 to move. It should be noted that a quantity of reflective elements in the space reflection module 20 and a size of each reflective element are not limited in this application. The following describes several implementations in which there are a plurality of reflective elements, so that an optical path length of an optical pulse in free space can be adjusted in a larger range, helping increase an adjustment range of a repetition frequency of the optical pulse.

FIG. 2 is a diagram of a second structure of a laser according to an embodiment of this application. Different from the implementation shown in FIG. 1, as shown in FIG. 2, the PZT 104 may be alternatively connected to an optical fiber that is in the laser emitting apparatus and that is configured to propagate an optical pulse. For example, the PZT 104 may be connected to an optical fiber in the laser generation module 101. For another example, the PZT 104 may be connected to an optical fiber between the first coupler 102 and the fiber collimator 105. The control apparatus adjusts the voltage applied to the PZT 104, so that the PZT deforms to stretch the optical fiber, which can change an optical path length of the optical pulse propagating in the optical fiber, and can also adjust a repetition frequency of the optical pulse.

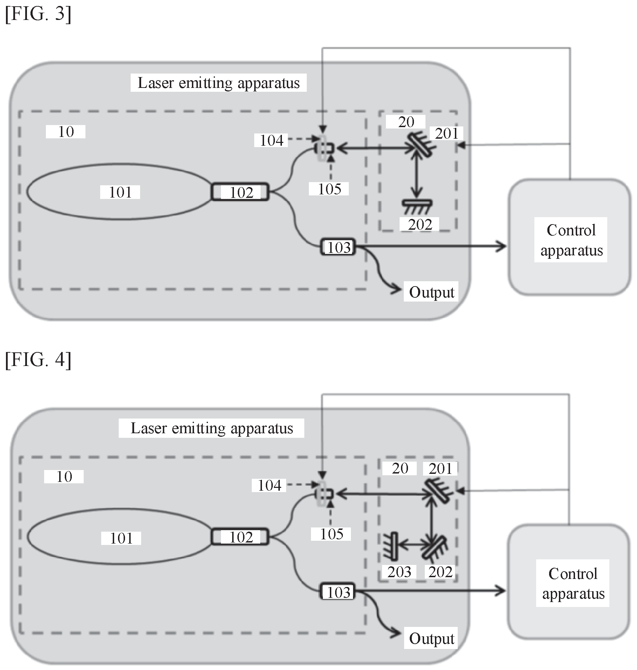

FIG. 3 is a diagram of a third structure of a laser according to an embodiment of this application. Different from the implementation shown in FIG. 1, as shown in FIG. 3, the space reflection module 20 further includes a second reflective element 202. The first reflective element 201 reflects the first optical pulse from the fiber collimator 105 to the second reflective element 202, the second reflective element 202 reflects the first optical pulse back to the first reflective element 201, and the first reflective element 201 reflects the first optical pulse back to the fiber collimator 105. It should be understood that, in practical application, on the premise that both the first reflective element 201 and the second reflective element 202 can receive the first optical pulse, the control apparatus may control movement of only at least one of the first reflective element 201 and the second reflective element 202. For example, movement of the second reflective element 202 may be independently controlled. For another example, the first reflective element 201 and the second reflective element 202 may be controlled to move together.

FIG. 4 is a diagram of a fourth structure of a laser according to an embodiment of this application. Different from the implementations shown in FIG. 1 and FIG. 3, as shown in FIG. 4, the space reflection module 20 further includes a third reflective element 203. The first optical pulse from the fiber collimator 105 is reflected by the first reflective element 201, the second reflective element 202, and the third reflective element 203 in sequence, and then is reflected back to the fiber collimator 105 along the original path. It should be understood that, in practical application, on the premise that the first reflective element 201, the second reflective element 202, and the third reflective element 203 can all receive the first optical pulse, the control apparatus may control movement of only at least one of the first reflective element 201, the second reflective element 202, and the third reflective element 203. For example, the third reflective element 203 may be kept stationary, and the first reflective element 201 and the second reflective element 202 are controlled to move together. For another example, the first reflective element 201 may be kept stationary, and the second reflective element 202 and the third reflective element 203 are controlled to move together.

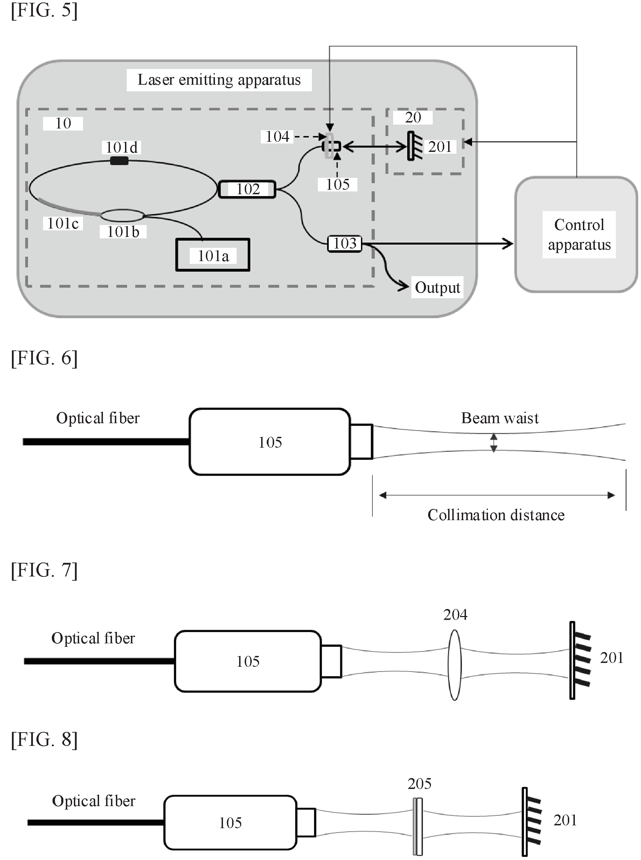

FIG. 5 is a diagram of a fifth structure of a laser according to an embodiment of this application. As shown in FIG. 5, in a possible implementation, the laser generation module 101 uses a nonlinear amplifying loop mirror (nonlinear amplifying loop mirror, NALM), so that a mode locking threshold is reduced, and a mode-locked space length change resistance capability is improved. Even if an optical path length of an optical pulse is adjusted in a large range, continuous generation of optical pulses can still be maintained. For example, the first laser light generated by the NALM propagates clockwise in the NALM, and the second laser light generated by the NALM propagates clockwise in the NALM. The first coupler 102 causes nonlinear interference between the first laser light and the second laser light to obtain an optical pulse. The laser generation module 101 includes a pump source 101a, a wavelength division multiplexer 101b, and a gain fiber 101c. The wavelength division multiplexer 101b is configured to couple pump light output by the pump source 101a to the gain fiber 101c in a wavelength combining manner. Light passing through the gain fiber 101c and light output by the pump source 101a have different wavelengths. It should be understood that, the wavelength division multiplexer 101b and the gain fiber 101c each may be considered as some components on the NALM. Specific component composition of the NALM is not limited in this application. For example, the NALM further includes a common optical fiber connected to the gain fiber 101c. For another example, the NALM may further include a saturable absorber 101d. The gain fiber 101c may be a doped fiber, and the doped fiber includes an erbium-doped fiber, an ytterbium-doped fiber, a thulium-doped fiber, and the like. In some possible implementations, a semiconductor saturable absorber mirror (semiconductor saturable absorber mirror, SESAM) may be added to the laser generation module 101 to perform hybrid mode locking.

FIG. 6 is a first diagram of an optical pulse, that is output by a fiber collimator, propagating in free space according to an embodiment of this application. As shown in FIG. 6, a beam output by the fiber collimator converges first and then diverges. A collimation distance of the fiber collimator is a distance between a spatial position and the fiber collimator when a light spot size at the spatial position is the same as an initial light spot size. The distance may also be referred to as a working distance of the fiber collimator. In a possible implementation, the collimation distance of the fiber collimator is greater than a one-way propagation distance of the first optical pulse in free space. In this way, a light spot size of the first optical pulse reflected back to the fiber collimator changes slightly and spreads slightly relative to the initial light spot size, which is more conducive to coupling to the optical fiber, to help improve a mode locking effect of the laser. The structure shown in FIG. 1 is used as an example. The one-way propagation distance of the first optical pulse in free space is a propagation distance of the first optical pulse from the fiber collimator 105 to the first reflective element 201, and a collimation distance of the fiber collimator is greater than a maximum distance by which the first reflective element 201 can move. In other words, the first reflective element 201 does not move to a position beyond the collimation distance of the fiber collimator. The structure shown in FIG. 2 is used as an example. The one-way propagation distance of the first optical pulse in free space is a propagation distance of the first optical pulse from the fiber collimator 105 to the first reflective element 201 and then to the second reflective element 202. The structure shown in FIG. 3 is used as an example. The one-way propagation distance of the first optical pulse in free space is a propagation distance of the first optical pulse from the fiber collimator 105 to the first reflective element 201, then to the second reflective element 202, and then to the third reflective element 203.

FIG. 7 is a second diagram of an optical pulse, that is output by a fiber collimator, propagating in free space according to an embodiment of this application. As shown in FIG. 7, a lens 204 is further disposed between the fiber collimator 105 and the first reflective element 201. The lens 204 is configured to perform beam shaping on the first optical pulse collimated by the fiber collimator 105, to achieve an effect of assisting collimation. The scenario shown in FIG. 1 is used as an example. A light spot size of the first optical pulse propagating to a position of the first reflective element 201 through the lens 204 is the same as or close to an initial light spot size output by the fiber collimator 105. In this way, the light spot size of the first optical pulse reflected back to the fiber collimator changes slightly and spreads slightly relative to the initial light spot size, which is more conducive to coupling to the optical fiber, to help improve the mode locking effect of the laser. For the scenario shown in FIG. 2, the lens 204 enables a light spot size of the first optical pulse propagating to a position of the second reflective element 202 to be the same as or close to the initial light spot size output by the fiber collimator 105. For the scenario shown in FIG. 3, the lens 204 enables a light spot size of the first optical pulse propagating to a position of the third reflective element 203 to be the same as or close to the initial light spot size output by the fiber collimator 105.

FIG. 8 is a third diagram of an optical pulse, that is output by a fiber collimator, propagating in free space according to an embodiment of this application. As shown in FIG. 8, a diffractive optical element (diffractive optical element, DOE) 205 is further disposed between the fiber collimator 105 and the first reflective element 201. A function of the DOE 205 is similar to that of the lens 204, and details are not described herein again.

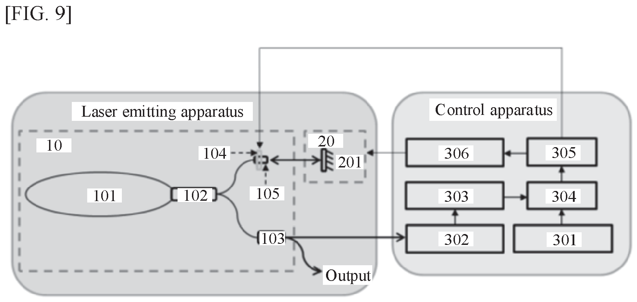

FIG. 9 is a diagram of a sixth structure of a laser according to an embodiment of this application. As shown in FIG. 9, the control apparatus includes a reference signal source 301, a photodetector 302, a filter 303, a frequency mixer 304, a first control module 305, and a second control module 306. The reference signal source 301 is configured to output a target reference signal. The photodetector 302 is configured to convert the second optical pulse into an electrical signal. The filter 303 is configured to filter the electrical signal. The frequency mixer 304 is configured to mix the target reference signal with the filtered electrical signal to obtain a mixed signal. The first control module 305 may determine, based on the mixed signal, a relative error between the repetition frequency of the optical pulse generated by the laser emitting apparatus and a target frequency of the target reference signal, and adjust, based on the relative error, the voltage applied to the PZT 104 to control movement of the fiber collimator 105 to adjust the optical path length of the first optical pulse propagating in free space, thereby quickly locking the repetition frequency of the optical pulse to the target frequency of the target reference signal. Optionally, the control apparatus may not include the filter 303, and the frequency mixer 304 mixes the target reference signal with the electrical signal from the photodetector 302 to obtain a mixed signal. In some possible scenarios, the first control module and the second control module may be two independent circuit boards, or in some other possible scenarios, the first control module and the second control module may be integrated together and implemented through a controller.

It should be noted that, the repetition frequency of the optical pulse may be locked within a maximum adjustment range of the voltage applied to the PZT 104, and a maximum adjustment amount of the voltage applied to the PZT 104 corresponds to a maximum adjustment amount of the repetition frequency of the optical pulse that can be adjusted by the PZT 104. For example, a maximum range of the voltage applied to the PZT 104 may be 0 V to 150 V, -50 V to 50 V, or the like. For example, the maximum range of the voltage applied to the PZT 104 is 0 V to 150 V. The maximum adjustment amount of the voltage applied to the PZT 104 is 150 V. A difference between the repetition frequency of the optical pulse when the voltage applied to the PZT 104 is 150 V and the repetition frequency of the optical pulse when the voltage applied to the PZT 104 is 0 V is the maximum adjustment amount of the repetition frequency of the optical pulse that can be adjusted by the PZT 104.

It should be understood that, if the voltage applied to the PZT 104 is outside the maximum adjustment range of the voltage in which the repetition frequency is kept locked, the repetition frequency of the optical pulse is unlocked in a frequency tuning process, which is referred to as frequency unlocking. To avoid frequency unlocking, a control range, or referred to as a preset voltage range, may be set for the voltage applied to the PZT 104. The control range is within the maximum adjustment range of the voltage applied to the PZT. For example, if the maximum range of the voltage applied to the PZT 104 is 0 V to 150 V, the control range may be set to 50 V to 100 V. If the voltage applied to the PZT 104 is outside the control range, the second control module 306 needs to be started. For example, if the voltage applied to the PZT 104 is less than 50 V or greater than 100 V, it is considered that the voltage is outside the control range. The second control module 306 controls movement of the first reflective element 201 to adjust the optical path length of the first optical pulse, so as to adjust the repetition frequency of the optical pulse, thereby compensating the adjustment of the first control module 305, so that the voltage applied to the PZT 104 returns to the control range. In other words, the control apparatus uses a serial control manner for the PZT and the first reflective element. That is, the optical path length of the optical pulse is adjusted first by controlling the PZT, to implement frequency locking. If a risk of frequency unlocking is found based on an adjustment state of the PZT, the optical path length of the optical pulse may be further compensated by controlling movement of the first reflective element, to avoid frequency unlocking in a frequency tuning process.

In an example, the voltage applied to the PZT 104 adjusted by the first control module 305 based on the mixed signal is outside the control range, that is, the optical path length of the first optical pulse propagating in free space may be too long, and the repetition frequency of the optical pulse has a risk of frequency unlocking. The second control module 306 controls movement of the first reflective element 201 based on the voltage applied to the PZT 104, to shorten the optical path length of the first optical pulse propagating in free space, so as to adjust the repetition frequency of the optical pulse. The mixed signal also changes accordingly. The voltage applied to the PZT 104 adjusted by the first control module 305 based on the mixed signal returns to the control range.

It should be understood that, although the first reflective element 201 can move in a relatively large range, and can implement frequency tuning in a relatively large range, an adjustment amplitude that the second control module 306 controls movement of the first reflective element 201 cannot be excessively large, and needs to ensure that frequency unlocking does not occur in the frequency tuning process. In other words, the second control module 306 can adjust the repetition frequency of the optical pulse more precisely than the first control module 305. Therefore, the frequency adjustment amount of the repetition frequency of the optical pulse corresponding to the minimum displacement distance of the first reflective element 201 is less than the frequency adjustment amount of the repetition frequency of the optical pulse corresponding to the maximum adjustment amount of the voltage applied to the PZT 104. In other words, precision of a single adjustment of the displacement of the first reflective element 201 is less than a maximum movement distance that is of the fiber collimator 105 and that is controlled by adjusting the voltage applied to the PZT 104. In an example, the precision of a single adjustment of the displacement of the first reflective element 201 is 20 nm, and a displacement range of the first reflective element 201 is 50 mm.

It should be noted that, the repetition frequency of the optical pulse can be locked within the maximum adjustment range of the voltage applied to the PZT 104, so that if the relative error between the repetition frequency of the optical pulse and the target frequency of the target reference signal is relatively large, the repetition frequency of the optical pulse cannot be locked to the target frequency at a time by adjusting the voltage applied to the PZT 104. In this case, a frequency tuning step may be set for the reference signal source 301 based on the maximum adjustment range of the voltage applied to the PZT 104, and a signal output by the reference signal source 301 is adjusted for a plurality of times to the target reference signal having the target frequency by performing frequency tuning for a plurality of times on the reference signal source 301. The following describes a specific implementation.

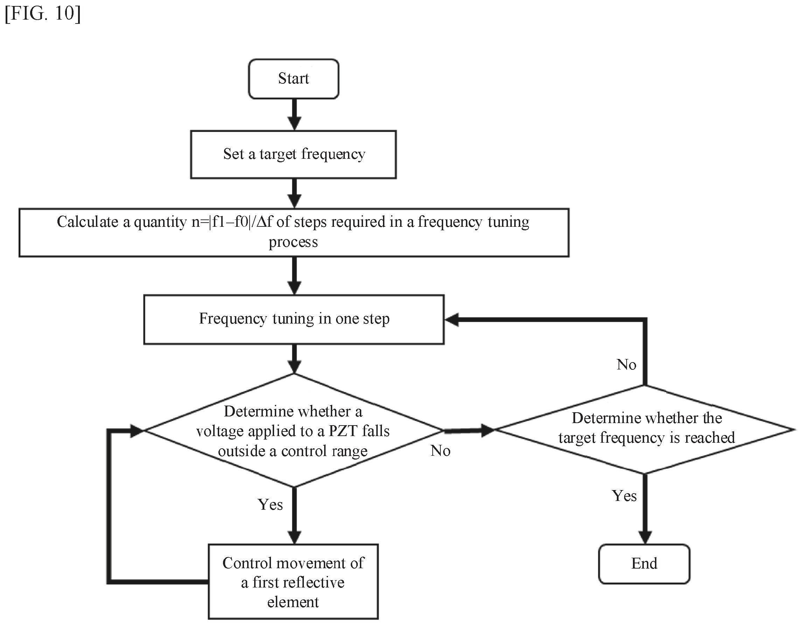

FIG. 10 is a schematic flowchart of adjusting a repetition frequency of an optical pulse according to an embodiment of this application. As shown in FIG. 10, an initial frequency f0 and a target frequency f1 of the reference signal source 301 are first determined, and then a quantity of steps n required for frequency tuning of the reference signal source 301 to the target frequency f1 is calculated based on the frequency tuning step Δf of the reference signal source 301, where n=|f1-f0|/Δf. Further, each time a frequency of a reference signal output by the reference signal source 301 is adjusted, the voltage applied to the PZT 104 adjusted by the first control module 305 based on the mixed signal locks the frequency of the optical pulse to the frequency of the current reference signal. If the voltage applied to the PZT 104 is outside the control range, the second control module 306 controls movement of the first reflective element 201, so that the voltage applied to the PZT 104 returns to the control range, thereby avoiding frequency unlocking. If the voltage applied to the PZT 104 does not fall outside the control range, the second control module 306 is not enabled. In this case, repeating n steps of the foregoing operations is a complete process of adjusting the repetition frequency of the optical pulse.

It should be understood that, the frequency tuning step Δf of the reference signal source 301 cannot be too large; otherwise, frequency unlocking may occur. That is, the frequency tuning step Δf of the reference signal source 301 should be less than a first preset value, where the first preset value is the frequency adjustment amount of the repetition frequency of the optical pulse corresponding to the maximum adjustment amount of the voltage applied to the PZT 104. For example, a value range of the first preset value may be 1 kHz to 50 kHz. It should be further understood that, the frequency tuning step Δf of the reference signal source 301 cannot be too small, or the entire frequency tuning process is too slow. That is, the frequency tuning step Δf of the reference signal source 301 should be greater than or equal to a second preset value, where the second preset value is the frequency adjustment amount of the repetition frequency of the optical pulse corresponding to the minimum displacement distance of the first reflective element 201. For example, a value range of the second preset value may be 1 Hz to 10 Hz.

It should be noted that, in some possible scenarios, the control apparatus may not adjust the voltage applied to the PZT 104 based on feedback of the second optical pulse, but manual control is performed by using the control apparatus to adjust the voltage applied to the PZT 104. Correspondingly, the control apparatus is used to manually control movement of the first reflective element 201. In some other possible scenarios, the control apparatus may alternatively perform independent control on the PZT and the first reflective element separately. For example, the control apparatus may alternatively directly control movement of the first reflective element based on the mixed signal, to change the optical path length of the optical pulse, thereby adjusting the repetition frequency of the optical pulse.

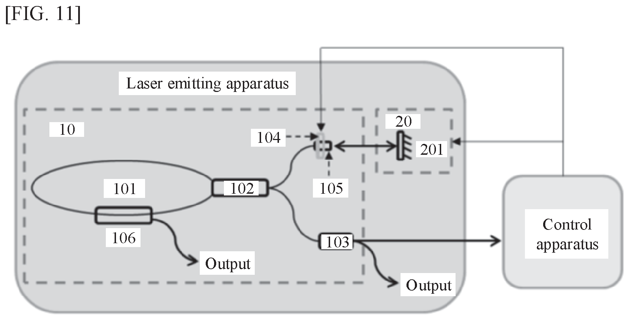

FIG. 11 is a diagram of a seventh structure of a laser according to an embodiment of this application. Different from the laser shown in FIG. 1, as shown in FIG. 11, the laser emitting apparatus further includes a third coupler 106. A function of the third coupler 106 is similar to that of the second coupler 103. For example, the third coupler 106 may be disposed in the laser generation module 101, and the third coupler 106 has a one-input and two-output design. When the laser generation module 101 generates a stable optical pulse, the third coupler 106 can split the optical pulse generated by the laser generation module 101, one branch of the split optical pulse propagates to the first coupler 102, and another branch of the split optical pulse is output externally. In this way, in combination with an optical pulse emitted by the second coupler 103, emission of a plurality of optical pulses may be implemented.

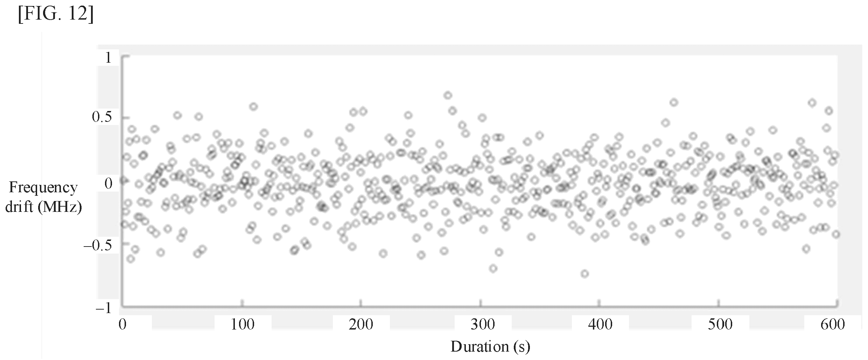

FIG. 12 is a diagram of a drift measurement result of a repetition frequency of an optical pulse according to an embodiment of this application. As shown in FIG. 12, the horizontal coordinate represents measurement duration in seconds (s); and the vertical coordinate represents a frequency drift amount in mHz. It can be seen that a measurement result of a frequency drift is about ±1 mHz, which indicates that the frequency locking effect is good.

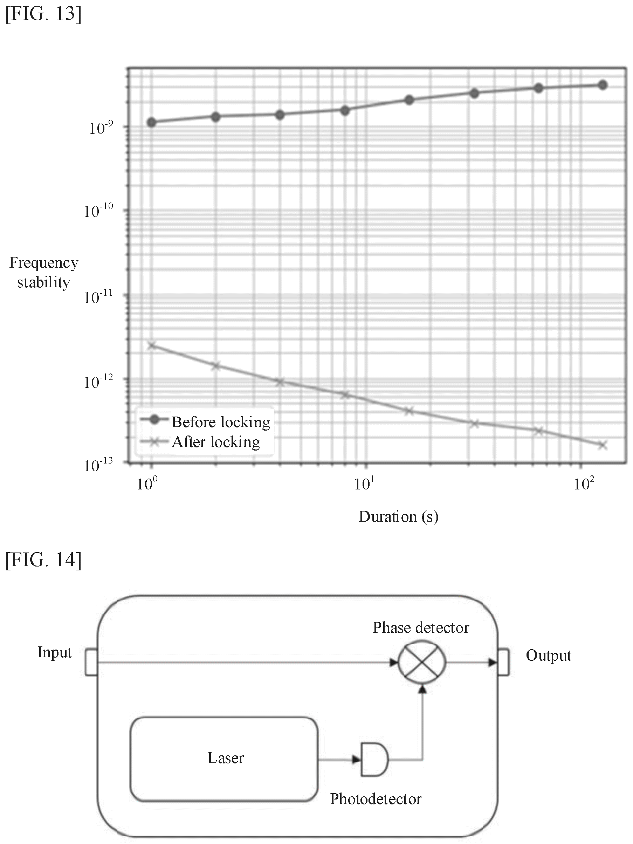

FIG. 13 is a diagram of a comparison between a locked repetition frequency and an unlocked repetition frequency of an optical pulse according to an embodiment of this application. As shown in FIG. 13, the horizontal coordinate represents duration in seconds (s); and the vertical coordinate represents frequency stability. It can be seen that second stability of the locked repetition frequency is 0.3 mHz, and the frequency locking effect is good.

It can be learned from the foregoing description that, the laser includes a laser generation module, a first coupler, and a reflective space structure formed by at least one reflective element. A plurality of channels of laser light generated by the laser generation module form an optical pulse through interference in the first coupler, and the optical pulse is split into two branches: a first optical pulse propagating toward the reflective element and a second optical pulse that is output. The first optical pulse is reflected back to the laser generation module by the reflective element. By controlling movement of the reflective element, an optical path length of an optical pulse propagating in free space can be changed, so that a repetition frequency of the optical pulse generated by the laser generation module can be adjusted. It should be understood that, controlling movement of the reflective element can adjust an optical path length of an optical pulse in a round trip in free space, which is equivalent to changing the optical path length of the optical pulse in free space by multiple times, to help adjust the repetition frequency of the optical pulse in a larger range. For example, a wide-range optical path length change exceeding 60 mm can be implemented, and wide-range frequency tuning exceeding 2 MHz can be implemented. In addition, the repetition frequency of the optical pulse generated by the laser generation module is locked by adjusting the voltage applied to the PZT, and a displacement direction and a displacement distance of the reflective element can be further adjusted based on the voltage applied to the PZT. In this way, the repetition frequency of the optical pulse can be adjusted more precisely while frequency locking is implemented, thereby improving the accuracy of adjusting the repetition frequency and reducing the risk of frequency unlocking.

The following describes possible application scenarios of the foregoing laser.

FIG. 14 is a diagram of an electrical signal phase detection device according to an embodiment of this application. As shown in FIG. 14, the electrical signal phase detection device includes a laser, a photodetector, and a phase detector. The laser may be the laser described in any one of the foregoing embodiments. Specifically, the photodetector is configured to convert light output by the laser into a first electrical signal, and transmit the first electrical signal to the phase detector. A second electrical signal is also input to the phase detector. For example, the second electrical signal may be a clock signal. The phase detector is configured to determine a phase difference between the first electrical signal and the second electrical signal, and output an electrical phase signal of a phase detection error. It should be understood that, the signal output by the phase detector may be fed back to a device that outputs the second electrical signal, and is used as a reference basis for adjusting the second electrical signal.

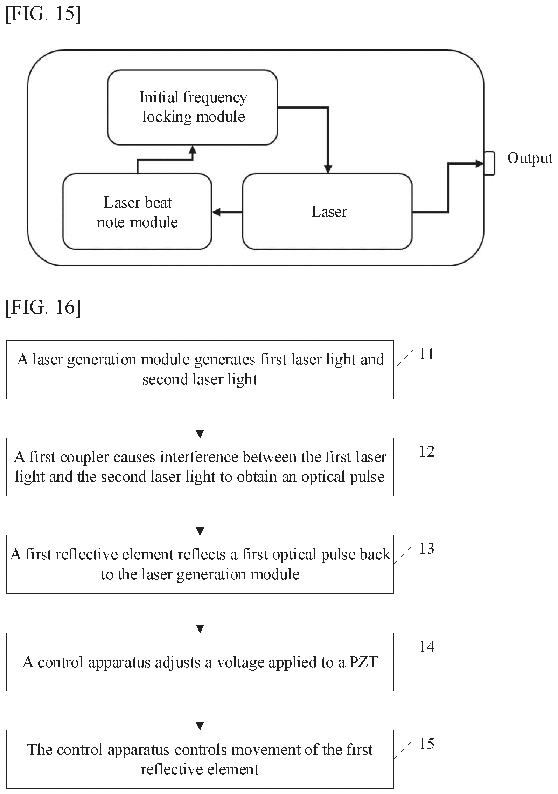

FIG. 15 shows an optical frequency comb device according to an embodiment of this application. As shown in FIG. 15, the optical frequency comb device includes a laser beat note module, an initial frequency locking module, and the laser described in any one of the foregoing embodiments. The laser beat note module is configured to perform spectral broadening, frequency multiplication, and beat note detection based on the optical pulse emitted by the laser to obtain an initial frequency signal. The initial frequency locking module is configured to output a control signal to the laser based on the initial frequency signal. The laser is configured to lock an initial frequency based on the control signal, and output an optical frequency comb signal.

The following describes an optical pulse frequency tuning method provided in an embodiment of this application.

FIG. 16 is a diagram of an embodiment of an optical pulse frequency tuning method according to an embodiment of this application. It should be noted that the method is implemented based on the laser described above. For descriptions of the laser, refer to related descriptions in the foregoing embodiments. Details are not described herein again. In this example, the optical pulse frequency tuning method includes the following steps.

11. The laser generation module generates first laser light and second laser light.

For example, the laser generation module uses an NALM. The first laser light propagates clockwise in the NALM, and the second laser light propagates clockwise in the NALM.

12. The first coupler causes interference between the first laser light and the second laser light to obtain an optical pulse.

The first coupler causes nonlinear interference between the first laser light and the second laser light to obtain an optical pulse, and the optical pulse passing through the first coupler is split into two branches: a first optical pulse propagating toward the first reflective element and a second optical pulse that is output.

13. The first reflective element reflects the first optical pulse back to the laser generation module.

Specifically, the first optical pulse from the first coupler is collimated by the fiber collimator to obtain the first optical pulse propagating in free space. The first optical pulse may be reflected back to the fiber collimator by the first reflective element. It should be understood that, a quantity of reflective elements in free space is not limited in this application. For example, the first optical pulse may alternatively be reflected by a plurality of reflective elements in free space for a plurality of times.

14. The control apparatus adjusts a voltage applied to the PZT.

Specifically, the control apparatus converts the input second optical pulse into an electrical signal, filters the electrical signal, and mixes the filtered electrical signal with a target reference signal to obtain a mixed signal. Further, the control apparatus adjusts, based on the mixed signal, the voltage applied to the PZT to control the fiber collimator to move or stretch the optical fiber, to adjust an optical path length of the first optical pulse, thereby locking a repetition frequency of the optical pulse to a frequency of the target reference signal.

15. The control apparatus controls movement of the first reflective element.

Specifically, the control apparatus determines whether the voltage applied to the PZT is outside a control range, and if the voltage applied to the PZT is outside the control range, it indicates that the repetition frequency of the optical pulse has a risk of frequency unlocking. In this case, the control apparatus controls movement of the first reflective element based on the voltage applied to the PZT to adjust the optical path length of the first optical pulse, so as to adjust the repetition frequency of the optical pulse, so that the voltage applied to the PZT returns to the control range.

It should be noted that the foregoing embodiments are merely used to describe technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A laser, comprising: a laser emitting apparatus and a control apparatus, wherein the laser emitting apparatus comprises a laser generation module, a first coupler, and a first reflective element;
the laser generation module is configured to generate first laser light and second laser light;
the first coupler is configured to cause interference between the first laser light and the second laser light to obtain an optical pulse, wherein the optical pulse comprises a first optical pulse propagating toward the first reflective element and a second optical pulse that is output;
the first reflective element is configured to reflect the first optical pulse back to the laser generation module; and
the control apparatus is configured to control movement of the first reflective element to adjust an optical path length of the first optical pulse.

2. The laser according to claim 1, wherein the laser generation module comprises a nonlinear amplifying loop mirror, NALM and a pump source, the NALM is connected to the first coupler, the pump source is configured to output pump light to the NALM, and the NALM is configured to generate the first laser light and the second laser light based on the pump light.

3. The laser according to claim 2, wherein the NALM comprises a wavelength division multiplexer WDM and a gain fiber, and the WDM is configured to couple the pump light output by the pump source to the gain fiber.

4. The laser according to claim 2 or 3, wherein the NALM further comprises a saturable absorber.

5. The laser according to any one of claims 1 to 4, wherein the laser emitting apparatus further comprises a second reflective element;
the first reflective element is configured to reflect the first optical pulse to the second reflective element, and then reflect, back to the laser generation module, the first optical pulse reflected from the second reflective element; and
the control apparatus is further configured to control movement of the second reflective element to adjust the optical path length of the first optical pulse.

6. The laser according to any one of claims 1 to 5, wherein the laser emitting apparatus further comprises a fiber collimator, and the fiber collimator is configured to collimate the first optical pulse from the first coupler, wherein the collimated first optical pulse propagates in free space toward the first reflective element.

7. The laser according to claim 6, wherein a collimation distance of the fiber collimator is greater than a one-way propagation distance of the first optical pulse in free space.

8. The laser according to claim 6 or 7, wherein the laser emitting apparatus further comprises a lens or a diffractive optical element, DOE, the lens or the DOE is located between the fiber collimator and the first reflective element, and the lens or the DOE is configured to perform beam shaping on the first optical pulse from the fiber collimator, and propagate the first optical pulse undergoing the beam shaping to the first reflective element.

9. The laser according to any one of claims 6 to 8, wherein the second optical pulse propagates toward the control apparatus, the laser emitting apparatus further comprises a piezoelectric ceramic transducer PZT that is connected to the fiber collimator, and the control apparatus is further configured to adjust, based on the second optical pulse, a voltage applied to the PZT to control movement of the fiber collimator to adjust the optical path length of the first optical pulse.

10. The laser according to any one of claims 1 to 9, wherein the second optical pulse propagates toward the control apparatus, the laser emitting apparatus further comprises a piezoelectric ceramic transducer PZT that is connected to an optical fiber in the laser generation module or an optical fiber configured to propagate the first optical pulse, and the control apparatus is further configured to adjust, based on the second optical pulse, a voltage applied to the PZT to control stretching of the optical fiber to adjust an optical path length of the optical pulse.

11. The laser according to claim 9 or 10, wherein the control apparatus is specifically configured to control movement of the first reflective element based on the voltage applied to the PZT.

12. The laser according to any one of claims 9 to 11, wherein the control apparatus comprises: a reference signal source, a photodetector, a frequency mixer, a first control module, and a second control module;
the reference signal source is configured to output a target reference signal;
the photodetector is configured to convert the second optical pulse into an electrical signal;
the frequency mixer is configured to mix the target reference signal with the electrical signal to obtain a mixed signal;
the first control module is configured to adjust the optical path length of the first optical pulse by adjusting, based on the mixed signal, the voltage applied to the PZT; and
if the voltage applied to the PZT is outside a preset voltage range, the second control module is configured to control movement of the first reflective element based on the voltage applied to the PZT and the preset voltage range to adjust the optical path length of the first optical pulse.

13. The laser according to claim 12, wherein the control apparatus further comprises a filter;
the filter is configured to filter the electrical signal from the photodetector; and
the frequency mixer is configured to mix the target reference signal with the filtered electrical signal to obtain a mixed signal.

14. The laser according to claim 12 or 13, wherein a frequency tuning step size of the reference signal source from outputting an initial reference signal to outputting the target reference signal is less than a first preset value, and the first preset value is a frequency adjustment amount of a repetition frequency of the optical pulse corresponding to a maximum adjustment amount of the voltage applied to the PZT.

15. The laser according to any one of claims 12 to 14, wherein the frequency tuning step size of the reference signal source from outputting the initial reference signal to outputting the target reference signal is greater than or equal to a second preset value, and the second preset value is a frequency adjustment amount of the repetition frequency of the optical pulse corresponding to a minimum displacement distance of the first reflective element.

16. The laser according to any one of claims 9 to 15, wherein the frequency adjustment amount of the repetition frequency of the optical pulse corresponding to the minimum displacement distance of the first reflective element is less than the frequency adjustment amount of the repetition frequency of the optical pulse corresponding to the maximum adjustment amount of the voltage applied to the PZT.

17. The laser according to any one of claims 1 to 16, wherein the laser emitting apparatus further comprises a second coupler; and
the second coupler is configured to split the second optical pulse, wherein one branch of the split second optical pulse propagates toward the control apparatus, and another branch of the split second optical pulse is output externally.

18. An electrical signal phase detection device, comprising a phase detector, a photodetector, and the laser according to any one of claims 1 to 17, wherein the photodetector is configured to convert light output by the laser into a first electrical signal, and transmit the first electrical signal to the phase detector; and
the phase detector is configured to determine a phase difference between the first electrical signal and a second electrical signal that is input.

19. An optical frequency comb device, wherein the optical frequency comb device comprises a laser beat note module, an initial frequency locking module, and the laser according to any one of claims 1 to 17, wherein
the laser beat note module is configured to perform spectral broadening, frequency multiplication, and beat note detection based on an optical pulse emitted by the laser to obtain an initial frequency signal;
the initial frequency locking module is configured to output a control signal to the laser based on the initial frequency signal; and
the laser is configured to lock an initial frequency based on the control signal, and output an optical frequency comb signal.

20. An optical pulse frequency tuning method, applicable to a laser, wherein the laser comprises a laser emitting apparatus and a control apparatus, and the laser emitting apparatus comprises a laser generation module, a first coupler, and a first reflective element; and the method comprises:
generating, by the laser generation module, first laser light and second laser light;
causing, by the first coupler, interference between the first laser light and the second laser light to obtain an optical pulse, wherein the optical pulse comprises a first optical pulse propagating toward the first reflective element and a second optical pulse that is output;
reflecting, by the first reflective element, the first optical pulse back to the laser generation module; and
controlling, by the control apparatus, movement of the first reflective element to adjust an optical path length of the first optical pulse.

21. The method according to claim 20, wherein the laser generation module comprises a nonlinear amplifying loop mirror NALM and a pump source, and the method further comprises: outputting, by the pump source, pump light to the NALM.

22. The method according to claim 21, wherein the NALM comprises a wavelength division multiplexer WDM and a gain fiber, and the method further comprises: coupling, by the WDM, the pump light output by the pump source to the gain fiber.
